# EUROPEAN PATENT SPECIFICATION

(11) **EP 3 153 394 B1**
(45) Date of publication and mention of the grant of the patent: **14.08.2019**
(21) Application number: 16191385.0
(22) Date of filing: 29.09.2016
(51) Int. Cl.: B62M 6/70, B62M 6/55, B62K 19/34, B62M 6/90, B62K 25/28

(54) **POWER-ASSISTED BICYCLE**
STROMUNTERSTÜTZTES FAHRRAD
VÉLO À ASSISTANCE ÉLECTRIQUE

(30) Priority: 02.10.2015 JP 2015196588
(43) Date of publication of application: 12.04.2017
(73) Proprietor: Yamaha Hatsudoki Kabushiki Kaisha, Iwata-shi, Shizuoka 438-8501 (JP)
(72) Inventor: MORIYAMA, Shuuji, Iwata-shi, Shizuoka 438-8501 (JP)
(74) Representative: Grünecker Patent- und Rechtsanwälte PartG mbB

(56) References cited:
- DE-A1-102013 112 804
- JP-A- 2000 177 676
- KR-A- 20130 110 294
- US-B1- 8 678 417

## Description

### Background of the Invention

The present invention relates to a power-assisted bicycle having a power unit mounted on a body frame.

A conventional power-assisted bicycle is described in, e.g., Japanese Patent Laid-Open No. 2001-106163 (to be simply referred to as literature 1 hereinafter). This power-assisted bicycle disclosed in literature 1 includes a body frame for supporting a front wheel and rear wheel, and a power unit mounted on the body frame. The power unit includes, for example, a pedal crank shaft which is rotated by the pedal force of a biker, a motor, and an output shaft. The resultant force of the pedal force (human power) of a biker and a motor driving force proportional to the magnitude of the pedal force is applied to the output shaft. The rotation of the output shaft is transmitted to the rear wheel via a chain.

The body frame of this power-assisted bicycle includes, e.g., a head pipe which steerably supports a front fork, a down tube which extends backward and downward from the head pipe, and a seat tube which extends upward from the lower end portion of the down tube. The power unit is mounted on a connecting portion between the down tube and seat tube via a plurality of power unit mounting brackets. A battery is installed above the power unit. This battery supplies power to the motor of the power unit. The battery is formed into a shape which is elongated in an upper-lower direction and arranged between the seat tube and rear wheel.

The power unit mounting brackets are arranged in positions corresponding to the two end portions of the power unit in the front-rear direction of the body, and in a position corresponding to the upper end portion of the power unit. Also, these brackets each have plate-like portions making a pair along the left-right direction of the body. Each plate-like portion extends in the front-rear direction and in the upper-lower direction of the body, and has a through hole for inserting a fixing bolt. In addition, these plate-like portions are spaced apart from each other at an interval into which a mounting portion of the power unit can be inserted. The mounting portion of the power unit has a through hole for inserting the fixing bolt, and is fastened to the plate-like portions by the fixing bolt while being inserted between the pair of plate-like portions. Therefore, the pair of plate-like portions elastically deform as they are pressed by the head of the fixing bolt and a nut, and are in tight contact with the mounting portion as they are pushed from the two sides in the left-right direction.

In bicycles including a power-assisted bicycle, the pedal force of a biker is desirably fully transmitted to the rear wheel.

To fully transmit the pedal force to the rear wheel in the power-assisted bicycle, the power unit must be mounted on the body frame in a rigid state in which the power unit cannot be displaced. To eliminate the displacement of the power unit, the rigidity of the power unit mounting brackets must be increased.

Unfortunately, the mounting structure of the power unit disclosed in literature 1 has the problem that the rigidity of the bracket for supporting the power unit cannot further be increased. This is so because if the rigidity of the bracket increases, the plate-like portion hardly elastically deforms, so the pair of plate-like portions cannot clamp the mounting portion of the power unit any longer. Note that when the plate-like portions and mounting portion are formed with high accuracy and the gap between them is minimized, the plate-like portions can clamp the mounting portion even if the elastic deformation amount of each plate-like portion is very small. However, this arrangement which increases the accuracy more than necessary cannot be adopted because the manufacturing cost unnecessarily increases.

Furthermore, prior art documents DE 10 2013112804 A1, which discloses a power-assisted bicycle according to the preambles of claims 1 and 2, KR 2013 0110294 and US 8 678 417 B1 are known from the state of the art.

### Summary of the Invention

The present invention has been made to eliminate the above problem, and has as its object to provide a power-assisted bicycle capable of improving the fastening properties when mounting the power unit and increasing the rigidity of the mounting structure, while reducing the manufacturing cost.

To achieve this object, a power-assisted bicycle is provided according to the subject matter of independent claims 1 and 2.

### Brief Description of the Drawings

Fig. 1 is a side view of a power-assisted bicycle according to the first embodiment;
Fig. 2 is a side view showing main parts in an enlarged scale;
Fig. 3 is a bottom view of a power unit and bracket;
Fig. 4 is a side view of the bracket, and shows a state in which a front fastening portion and rear fastening portion are cut away;
Fig. 5 is a sectional view taken along a line V - V of the front fastening portion shown in Fig. 4;
Fig. 6 is a sectional view taken along a line VI - VI of the bracket shown in Fig. 4;
Fig. 7 is a sectional view taken along a line VII - VII of the rear fastening portion shown in Fig. 4;
Fig. 8 is a perspective view showing the bracket when it is viewed obliquely frontways from below;
Fig. 9 is a side view of a power-assisted bicycle according to the second embodiment;
Fig. 10 is a side view showing main parts in an enlarged scale;
Fig. 11 is a bottom view of a power unit and bracket;
Fig. 12 is a side view of the bracket, and shows a state in which a front fastening portion and rear fastening portion are cut away;
Fig. 13 is a side view of a power unit and bracket according to the third embodiment;
Fig. 14 is a front view of the power unit and bracket when they are viewed from the front of the body;
Fig. 15 is a rear view of the power unit and bracket when they are viewed from the rear of the body;
Fig. 16 is a side view for explaining a power unit mounting work;
Fig. 17 is a side view of the body frame of a power-assisted bicycle according to the fourth embodiment;
Fig. 18 is a sectional view showing another embodiment of the fastening portion;
Fig. 19 is a sectional view showing still another embodiment of the fastening portion; and
Fig. 20 is a sectional view showing still another embodiment of the fastening portion.

### Description of the Preferred Embodiments

### (First Embodiment)

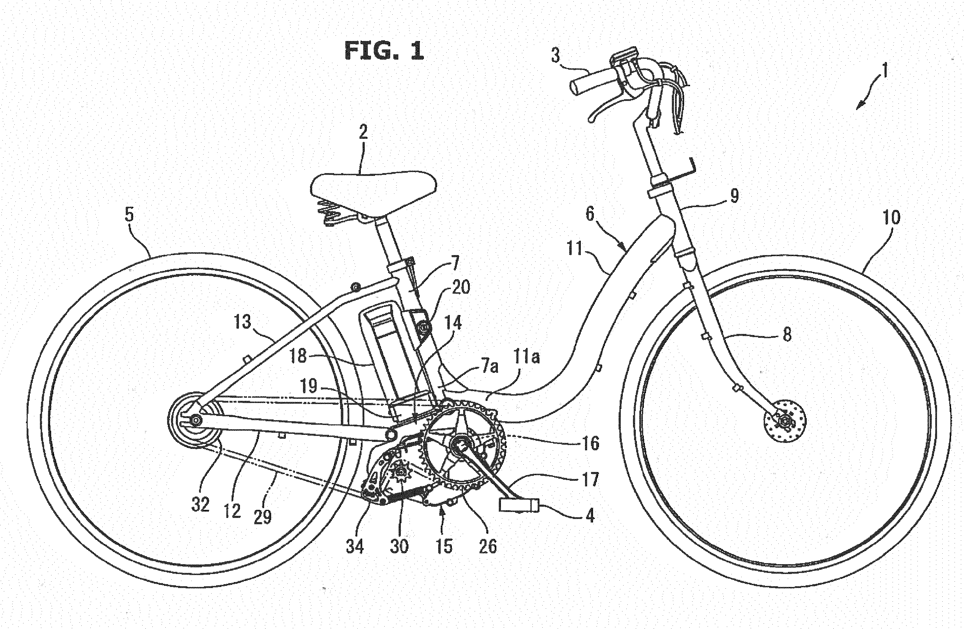

An embodiment of a power-assisted bicycle according to the present invention will be explained in detail below with reference to Figs. 1 to 5.

A power-assisted bicycle 1 shown in Fig. 1 includes a saddle 2 on which a biker (not shown) sits, and a handle 3 which the biker holds. When the biker steps on pedals 4 positioned below the saddle 2, a rear wheel 5 is driven, and the bicycle runs. The saddle 2 is installed on the upper end portion of a seat tube 7 as a part of a body frame 6. The handle 3 is pivotally supported together with a front fork 8 by a head pipe 9 of the body frame 6 such that the handle 3 pivots together with the front fork 8. The front fork 8 rotatably supports a front wheel 10.

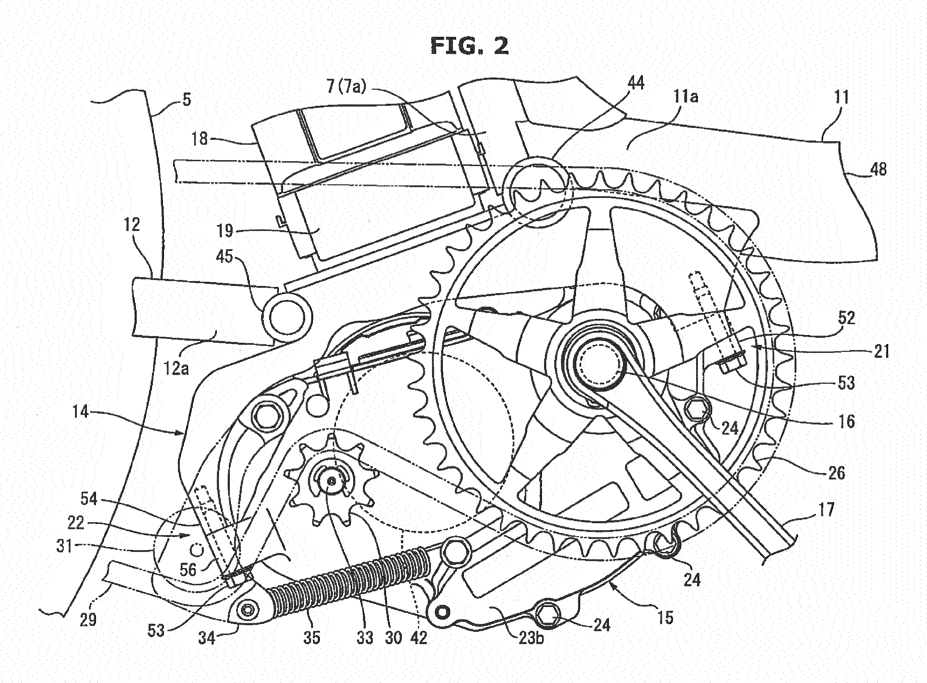

The body frame 6 includes, e.g., the above-described head pipe 9, a down tube 11 extending backward and downward from the head pipe 9, the seat tube 7 extending upward from the vicinity of the lower end portion of the down tube 11, and chain stays 12 and seat stays 13 which rotatably support the rear wheel 5. In this embodiment, a power unit mounting bracket 14 (to be described later) is welded to a lower end portion 11a of the down tube 11 and a lower end portion 7a of the seat tube 7. A power unit 15 is mounted via the bracket 14. A pedal crank shaft 16 (see Fig. 2) of the power unit 15 supports the pedals 4 described above via pedal cranks 17.

The chain stays 12 and seat stays 13 extend in the front-rear direction of the body on the two sides of the rear wheel 5. Front end portions 12a of the chain stays 12 are welded to the power unit mounting bracket 14 (to be described later). The front end portions of the seat stays 13 are welded to the upper end portion of the seat tube 7. A battery 18 for supplying power to the power unit 15 and other electrical components is arranged in a space below the front end portions of the seat stays 13 and between the rear wheel 5 and seat tube 7.

The battery 18 is formed into a square pillar shape which is elongated in an upper-lower direction. The lower end portion of the battery 18 is detachably supported by a support member 19. The support member 19 is attached to the power unit mounting bracket 14. The battery 18 supported by the support member 19 can swing between a mounted position shown in Fig. 1 and a detaching position at which the upper portion of the battery 18 falls to the left side of the body. In a state in which the battery 18 is positioned in the mounted position, a connector (not shown) is connected to the battery 18, so the battery 18 can supply power. In a state in which the battery 18 is positioned in the detaching position, the connector is disconnected, so the battery 18 can be detached. Also, in the state in which the battery 18 is positioned in the above-described mounted position, a locking device 20 attached to the seat tube 7 regulates the swing of the battery 18, thereby holding the battery 18. As will be described in detail later, the power unit mounting bracket 14 and power unit 15 are connected to each other, as shown in Fig. 2, by a front fastening portion 21 positioned in the end portions of these members on the front side of the body, and a rear fastening portion 22 positioned in the end portions on the rear side of the body. The power unit 15 is formed by attaching all components and devices to a metal housing 23, and arranged below and near the bracket 14.

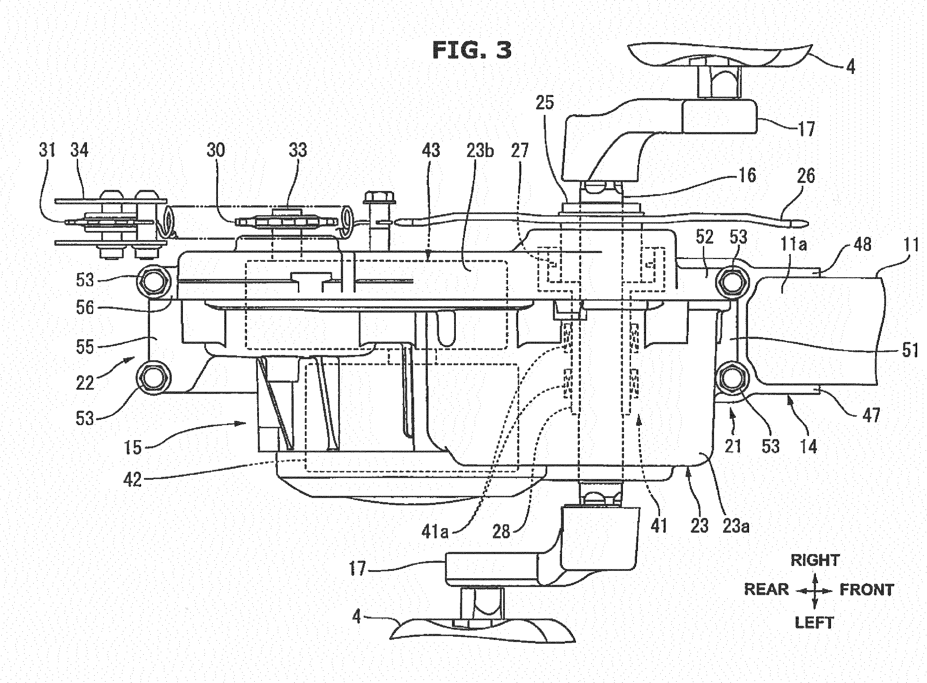

As shown in a bottom view of Fig. 3, the housing 23 split in the left-right direction into a left half portion 23a positioned on the body left side (the lower side in Fig. 3), and a right half portion 23b positioned on the body right side (the upper
side in Fig. 3). The left half portion 23a and right half portion 23b are joined together and connected by a plurality of connecting bolts 24 (see Fig. 2).

The pedal crank shaft 16 extends in the left-right direction of the body through the end portion of the housing 23 on the body front side.

The pedal crank shaft 16 is rotatably supported by the housing 23. One end portion of each pedal crank 17 is fixed to a corresponding one of the two end portions of the pedal crank shaft 16. The pedal 4 is rotatably attached to the other end portion of each pedal crank 17. Referring to Fig. 3, a crank rotation output shaft 25 is exposed between the pedal crank 17 positioned on the body right side and the housing 23. The crank rotation output shaft 25 is arranged on the same axis as that of the pedal crank shaft 16, and rotatably supported by the housing 23. A chain sprocket 26 is attached to the crank rotation output shaft 25. The crank rotation output shaft 25 is connected to a crank rotation input shaft 28 (to be described later) via a human-power one-way clutch 27. The human-power one-way clutch 27 prevents the reverse rotation of the chain sprocket 26 when the pedal crank shaft 16 reversely rotates. Also, the human-power one-way clutch 27 allows the chain sprocket 26 to rotate in the rotational direction when the bicycle runs in a state in which the pedal crank shaft 16 stops.

The chain sprocket 26 transmits the human power to the rear wheel 5. As shown in Fig. 1, a chain 29 (see Fig. 1) for driving the rear wheel is wound around the chain sprocket 26. As shown in Figs. 1 and 2, the chain 29 is wound around the chain sprocket 26 and a sprocket 32 of the rear wheel 5 in a state in which the chain 29 is wound around an output sprocket 30 and a tension sprocket 31 of the power unit 15. The output sprocket 30 is fixed to a motor output shaft 33 (to be described later) of the power unit 15. The tension sprocket 31 is rotatably supported by a tension arm 34 which is formed to be swingable in the power unit 15. The spring force of a tension coil spring 35 biases the tension arm 34 in a direction in which the chain 29 is pulled.

As indicated by the broken lines in Fig. 3, the power unit 15 incorporates, for example, a pedal force detector 41 coaxially formed around the pedal crank shaft 16, a motor 42 for auxiliary power positioned nearer the body rear side than the pedal crank shaft 16, and a speed reducer 43 for reducing the speed of the rotation of the motor 42 and transmitting the rotation to the motor output shaft 33. The pedal force detector 41 detects the magnitude of human power. As the pedal force detector 41, it is possible to use, e.g., a well-known magnetostrictive detector. The magnetostrictive pedal force detector 41 can be formed by using the cylindrical crank rotation input shaft 28 coaxially arranged around the pedal crank shaft 16, and a detection coil 41a arranged around the crank rotation input shaft 28. In this case, one end portion of the crank rotation input shaft 28 is connected to the pedal crank shaft 16, and the other end portion thereof is connected to an input portion of the one-way clutch 27. That is, when the pedal force of the biker is applied to the pedal crank shaft 16, the crank rotation input shaft 28 strains due to this pedal force. The detection coil 41a detects a change in magnetic permeability when the crank rotation input shaft 28 strains.

The motor 42 applies, to the speed reducer 43, a motor driving force proportional to the magnitude of the human power detected by the pedal force detector 41. The battery 18 positioned above the power unit 15 supplies electric power to be supplied to the motor 42.

The speed reducer 43 reduces the speed of the rotation of the motor 42 and transmits the rotation to the motor output shaft 33. The motor output shaft 33 is connected to the speed reducer 43 via a motor one-way clutch (not shown). The motor one-way clutch allows the motor output shaft 33 to rotate together with the output sprocket 30 and chain 29 while the motor 42 is stopping.

In the power unit 15, the motor output shaft 33 rotates when the motor 42 rotates, and the output sprocket 30 formed on the motor output shaft 33 applies the motor driving force to the chain 29. That is, the power unit 15 outputs the human power applied to the pedal crank shaft 16 and the motor driving force to the outside. The human power and motor driving force are applied to the chain 29, and transmitted as the resultant force of the human power and motor driving force to the rear wheel 5 via the chain 29. In this embodiment, the chain 29 is equivalent to "a transmitting member" of the present invention.

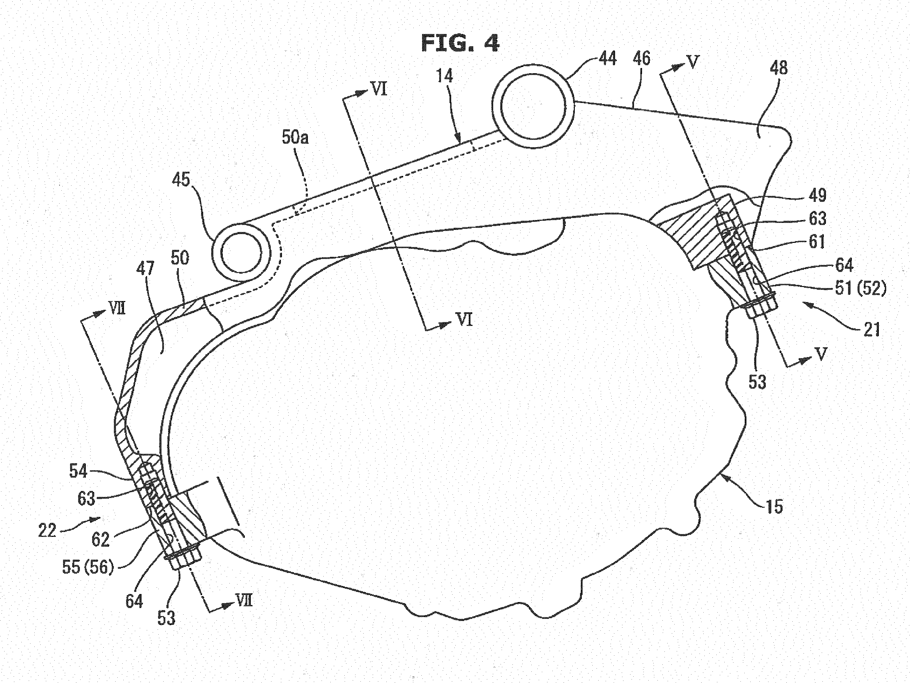

As shown in Fig. 4, the bracket 14 for mounting the power unit 15 on the body frame 6 is formed into an arcuate shape which projects upward when viewed sideways. Fig. 4 shows a state in which the power-assisted bicycle 1 with the front wheel 10 and rear wheel 5 being grounded is viewed from the right side of the body.

The bracket 14 according to this embodiment includes a first pipe 44, a second pipe 45, and a molded portion 46. The first and second pipes 44 and 45 are made of an aluminum alloy, and welded to the upper end portion of the molded portion 46 so as to extend in the left-right direction of the body.

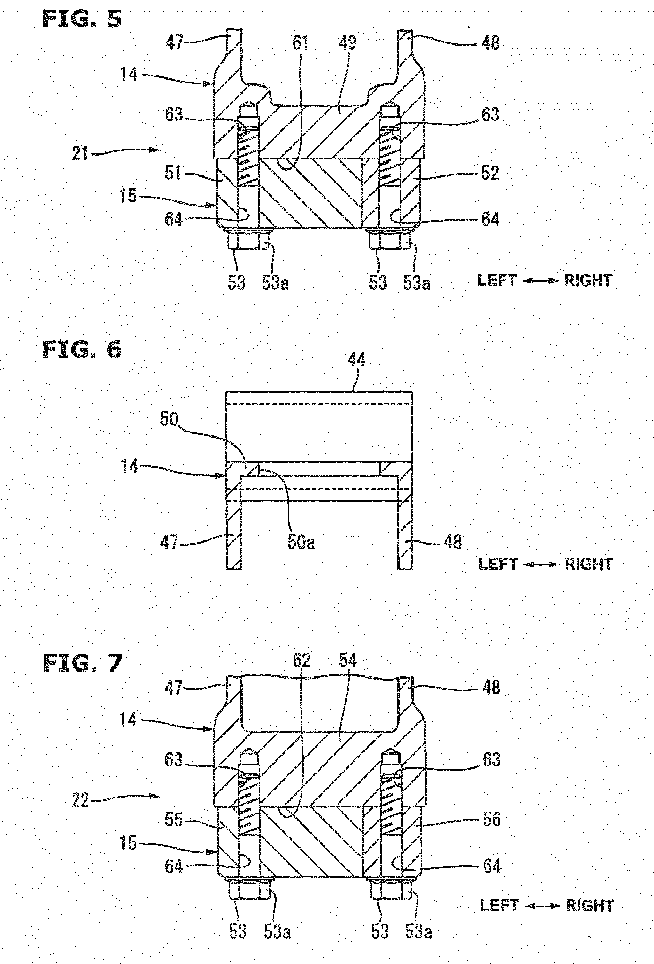

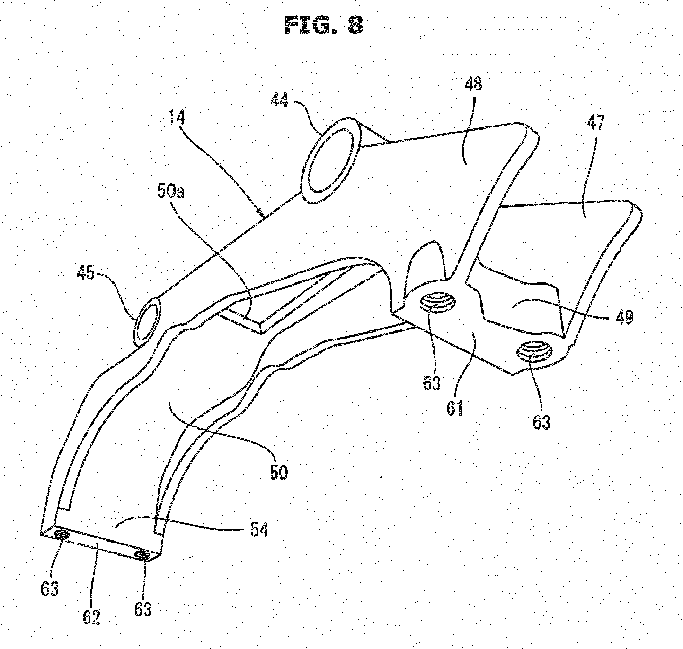

The molded portion 46 is formed into a predetermined shape by forging or casting by using an aluminum alloy. As shown in Figs. 5 to 8, the molded portion 46 includes a pair of side plates 47 and 48 positioned at the end portion of the body right side and the end portion of the body left side, a pillar member 49 extended between the front end portions of the side plates 47 and 48, and a top plate 50 connecting the upper end portions of the pair of side plates 47 and 48.

Of the first and second pipes 44 and 45, the first pipe 44 positioned on the body front side connects the upper end portions of the pair of side plates 47 and 48 on the body front side.

The top plate 50 is formed nearer the body rear side than the first pipe 44. As shown in Fig. 2, the lower end portion 11a of the down tube 11 and the lower end portion 7a of the seat tube 7 are welded to the first pipe 44. The lower end portion 11a of the down tube 11 is also welded to the upper end portions of the side plates 47 and 48 positioned nearer the body front side than the first pipe 44. Of the first and second pipes 44 and 45, the second pipe 45 positioned on the body rear side connects the upper end portions of the pair of side plates 47 and 48 on the body rear side. As shown in Fig. 2, the front end portions 12a of the chain stays 12 are welded to the second pipe 45. In this embodiment, therefore, the bracket 14 is fixed to the body frame 6 by being welded to the lower end portion 11a of the down tube 11, the lower end portion 7a of the seat tube 7, and the front end portions 12a of the chain stays 12.

As shown in Fig. 6, a through hole 50a is formed in a portion of the top plate 50 of the molded portion 46, which is positioned between the first pipe 44 and second pipe 45. Although not shown, a cable, brake wire, and the like for connecting the battery 18 and power unit 15 are inserted into the through hole 50a. The support member 19 for supporting the battery 18 is attached to the portion of the top plate 50, which is positioned between the first pipe 44 and second pipe 45.

As shown in Fig. 5, the pillar member 49 of the molded portion 46 forms the front fastening portion 21 together with first and second front mounting portions 51 and 52 (see Fig. 4) and two fixing bolts 53 of the power unit 15. Also, as shown in Fig. 7, a bracket rear end portion 54 formed into a plate-like shape by the rear end portions of the pair of side plates 47 and 48 and the rear end portion of the top plate 50 forms the rear fastening portion 22 together with first and second rear mounting portions 55 and 56 and two fixing bolts 53 of the power unit 15.

The pillar member 49 has a front mounting seat 61 pointing downward. The bracket rear end portion 54 has a rear mounting seat 62 pointing downward. "Downward" herein mentioned is downward when viewed in a state in which the front wheel 10 and rear wheel 5 of the power-assisted bicycle 1 are grounded, and includes downward along the vertical direction, and obliquely downward inclining to at least one of the front-rear direction and left-right direction of the body with respect to the vertical direction.

Screw holes 63 into which the fixing bolts 53 are screwed are formed in each of the front mounting seat 61 and rear mounting seat 62. In this embodiment, the screw hole 63 is equivalent to "a female screw portion" of the invention described in claim 2.

As shown in Fig. 3, the first front mounting portion 51 of the power unit 15 is integrated with the front end portion of the left half portion 23a of the housing 23. The second front mounting portion 52 is integrated with the front end portion of the right half portion 23b of the housing 23. Also, the first rear mounting portion 55 is integrated with the rear end portion of the left half portion 23a of the housing 23. The second rear mounting portion 56 is integrated with the rear end portion of the right half portion 23b of the housing 23. A through hole 64 (see Figs. 5 and 7) which extends in an upper-lower direction in a state in which the front wheel 10 and rear wheel 5 of the power-assisted bicycle are grounded is formed in each of the first and second front mounting portions 51 and 52 and the first and second rear mounting portions 55 and 56.

As shown in Fig. 5, the first and second front mounting portions 51 and 52 are overlaid on the front mounting seat 61 of the pillar member 49 from below, and fastened by the fixing bolts 53. The fixing bolts 53 extend in the upper-lower direction such that heads 53a are positioned below. The fixing bolts 53 are inserted into the through holes 64 of the first and second front mounting portions 51 and 52, and screwed into the screw holes 63 of the pillar member 49. "The upper-lower direction" herein mentioned is the direction in which the first and second front mounting portions 51 and 52 and the front mounting seat 61 of the pillar member 49 overlap each other.

As shown in Fig. 7, the first and second rear mounting portions 55 and 56 are overlaid on the rear mounting seat 62 of the bracket rear end portion 54 from below, and fastened by the fixing bolts 53. The fixing bolts 53 extend in the upper-lower direction such that the heads 53a are positioned below. The fixing bolts 53 are inserted into the through holes 64 of the first and second rear mounting portions 55 and 56, and screwed into the screw holes 63 of the bracket rear end portion 54. "The upper-lower direction" herein mentioned is the direction in which the first and second rear mounting portions 55 and 56 and the rear mounting seat 62 of the bracket rear end portion 54 overlap each other.

Next, the procedure of mounting the power unit 15 formed as described above on the body frame 6 will be explained. The work of mounting the power unit 15 is performed in a state in which the body frame 6 is inverted, i.e., turned upside down. When the body frame 6 is inverted, the front mounting seat 61 and rear mounting seat 62 of the bracket 14 point upward. To mount the power unit 15 on the body frame 6, the first and second front mounting portions 51 and 52 are first overlaid on the front mounting seat 61 projecting upward, and the first and second mounting portions 55 and 56 are overlaid on the rear mounting seat 62 from above.

Then, the fixing bolts 53 are inserted from above into the through holes 64 of the mounting portions 51, 52, 55, and 56, and screwed into the screw holes 63 of the front mounting seat 61 and rear mounting seat 62. When the fixing bolts 53 are screwed into the screw holes 63, the first and second front mounting portions 51 and 52 are fastened to the front mounting seat 61, and the first and second rear mounting portions 55 and 56 are fastened to the rear mounting seat 62. Consequently, the power unit 15 is mounted on the body frame 6 via the bracket 14.

In this embodiment, the bracket 14 need not elastically deform when attaching the first and second front mounting portions 51 and 52 and first and second rear mounting portions 55 and 56 of the power unit 15 to the front mounting seat 61 and rear mounting seat 62 of the bracket 14. This means that the bracket 14 having a high rigidity can be used. The bracket 14 and the mounting portions 51, 52, 55, and 56 of the power unit 15 need only be formed with accuracy by which they can overlap each other in an upper-lower direction. This accuracy can be lower than that when inserting the mounting portion between the pair of mounting plates so as to narrow the gas as in the conventional bicycle.

Accordingly, the accuracy does not become higher than necessary when forming the power unit mounting bracket 14 and the first and second front mounting portions 51 and 52 and first and second rear mounting portions 55 and 56 of the power unit 15. The power unit 15 is strongly mounted on the body frame 6 by the power unit mounting bracket 14 having a high rigidity. This embodiment can provide a power-assisted bicycle capable of improving both the fastening properties and rigidity when mounting the power unit 15 while reducing the manufacturing cost.

The screw holes 63 (female screw portions) into which the fixing bolts 53 are screwed are formed in the front mounting seat 61 and rear mounting seat 62 of the bracket 14 according to this embodiment. The through holes 64 which extend in an upper-lower direction when viewed in a state in which the front wheel 10 and rear wheel 5 are grounded are formed in the first and second front mounting portions 51 and 52 and first and second rear mounting portions 55 and 56 of the power unit 15. The fixing bolts 53 are screwed into the screw holes 63 through the through holes 64.

In this embodiment, the heads 53a of the fixing bolts 53 are positioned below the mounting portions 51, 52, 55, and 56. When compared to a case in which the fixing bolts 53 are inverted in an upper-lower direction, therefore, parts to be exposed below the mounting portions 51, 52, 55, and 56 are minimized. This is so because if the distal end portions of the fixing bolts 53 are positioned below the mounting portions 51, 52, 55, and 56, the distal end portions of the fixing bolts 53 and nuts (not shown) fastened to the distal end portions are exposed. Accordingly, the outer appearance of the power unit 15 is not spoiled by the fixing bolts 53.

Also, in this embodiment, the screw holes 63 are formed in the front mounting seat 61 and rear mounting seat 62 of the bracket 14. Therefore, the fastening work is performed with the fixing bolts 53 pointing downward by turning the body frame 6 upside down. That is, the fixing bolts 53 are inserted from above into the through holes 64 of the power unit 15 and screwed into the screw holes 63.

Accordingly, the work of mounting the power unit 15 can easily be performed by adopting this embodiment.

The body frame 6 according to this embodiment includes the front fork 8, down tube 11, seat tube 7, and chain stays 12. The bracket 14 is fixed to the body frame 6 by being welded to the lower end portion 11a of the down tube 11, the lower end portion 7a of the seat tube 7, and the front end portions 12a of the chain stays 12.

The fastening portions (the front fastening portion 21 and rear fastening portion 22) including the front mounting seat 61 and rear mounting seat 62 of the bracket 14, the mounting portions 51, 52, 55, and 56 of the power unit 15, and the fixing bolts 53 are formed in the two end portions of the bracket 14 and power unit 15 in the front-rear direction of the body.

Since, therefore, no fastening portion exists in a central portion above the power unit 15 in the front-rear direction, the bracket 14 can be arranged close to the portion above the power unit 15, so a wide free space is formed above the bracket 14. In this embodiment, the support member 19 of the battery 18 is arranged in this free space. Accordingly, the battery 18 as a heavy component is arranged near the center of the lower portion of the body. This makes it possible to centralize the mass and lower the center of gravity, and further increases the running stability.

Furthermore, the bracket 14 according to this embodiment reaches the front portions of the chain stays 12 from the lower end portion 11a of the down tube 11 via the lower portion of the seat tube 7, and is formed into an arcuate shape extending in the front-rear direction of the body. Since the power unit 15 is mounted on the front end portion and rear end portion of the bracket 14, the power unit 15 reinforces the bracket 14 which extends in the front-rear direction. In this embodiment, therefore, it is unnecessary to form any reinforcing member in the lower portion of the bracket 14 formed into an arcuate shape which projects upward when viewed sideways, so the bracket 14 is formed to be light in weight and compact.

### (Second Embodiment)

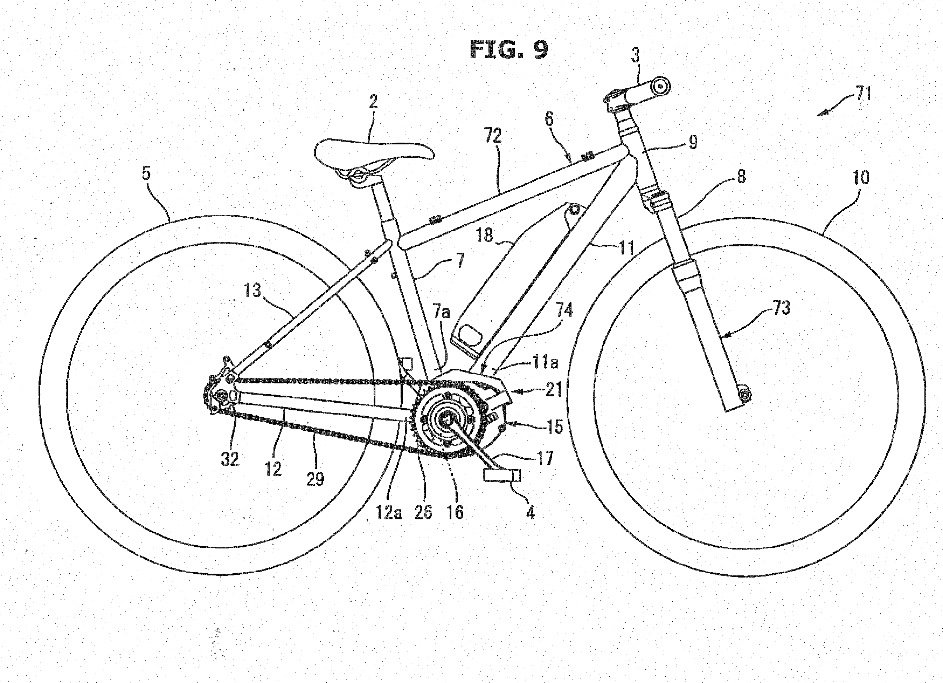

A power-assisted bicycle according to the present invention can be configured as shown in Figs. 9 to 12. The same reference numerals as in Figs. 1 to 8 denote the same or similar members in Figs. 9 to 12, and a detailed explanation thereof will properly be omitted.

A power-assisted bicycle 71 shown in Fig. 9 differs from the power-assisted bicycle 1 shown in Fig. 1 in the structure of a body frame 6 and the structure of a power unit 15. The body frame 6 of the power-assisted bicycle 71 according to this embodiment includes a top tube 72 connecting a head pipe 9 and the upper end portion of a seat tube 7. A front fork 8 has so-called telescopic front suspensions 73. Also, a down tube 11 is formed into a shape which linearly extends backward and downward. A battery 18 is detachably mounted on the down tube 11. A lower end portion 11a of the down tube 11 and a lower end portion 7a of the seat tube 7 are individually welded to a power unit mounting bracket 74.

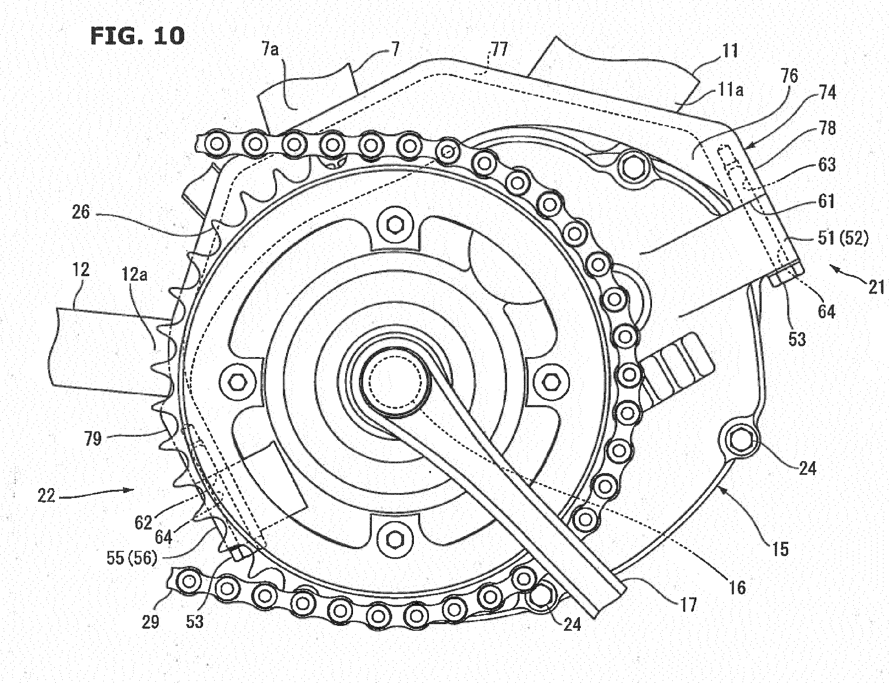

The bracket 74 according to this embodiment is formed into a predetermined shape by forging or casting by using an aluminum alloy as a material. The bracket 74 includes a pair of left and right side plates 75 and 76, and a top plate 77 connecting the upper ends of the side plates 75 and 76. As shown in Fig. 10, the bracket 74 is formed into an arcuate shape which projects upward when viewed sideways. As shown in Fig. 10, the lower end portion 11a of the down tube 11 is welded as it obliquely downwardly abuts against the front portion of the top plate 77 from the front. The lower end portion 7a of the seat tube 7 is welded as it obliquely downwardly abuts against the middle portion of the top plate 77 from behind. Front end portions 12a of chain stays 12 are welded as they abut against the rear portion of the top plate 77 from behind.

A bracket front end portion 78 including the front end portions of the pair of left and right side plates 75 and 76 and the front end portion of the top plate 77 has a front mounting seat 61 pointing downward. Also, a bracket rear end portion 79 including the rear end portions of the pair of left and right side plates 75 and 76 and the rear end portion of the top plate 77 has a rear mounting seat 62 pointing downward. As in the first embodiment, "downward" herein mentioned is downward when viewed in a state in which a front wheel 10 and a rear wheel 5 of the power-assisted bicycle 71 are grounded. Also, "downward" includes downward along the vertical direction, and obliquely downward inclining to at least one of the front-rear direction and left-right direction of the body with respect to the vertical direction.

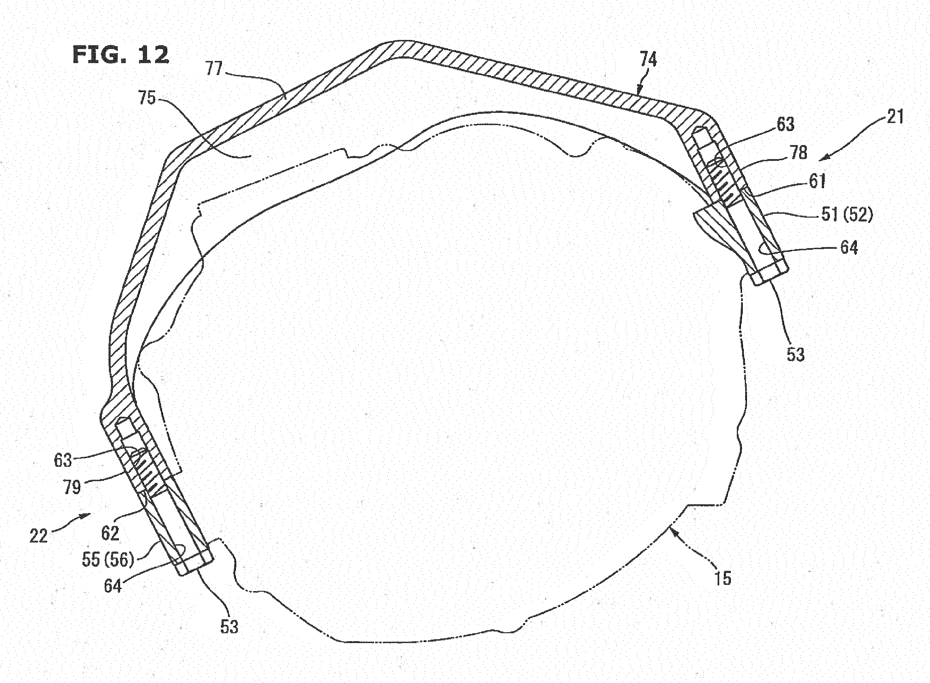

As shown in Fig. 12, screw holes 63 are formed in the front mounting seat 61 and rear mounting seat 62. Fixing bolts 53 inserted into through holes 64 of first and second rear mounting portions 51 and 52 of the power unit 15 are screwed into the screw holes 63 of the front mounting seat 61. Fixing bolts 53 inserted into through holes 64 of first and second rear mounting portions 55 and 56 are screwed into the screw holes 63 of the rear mounting seat 62.

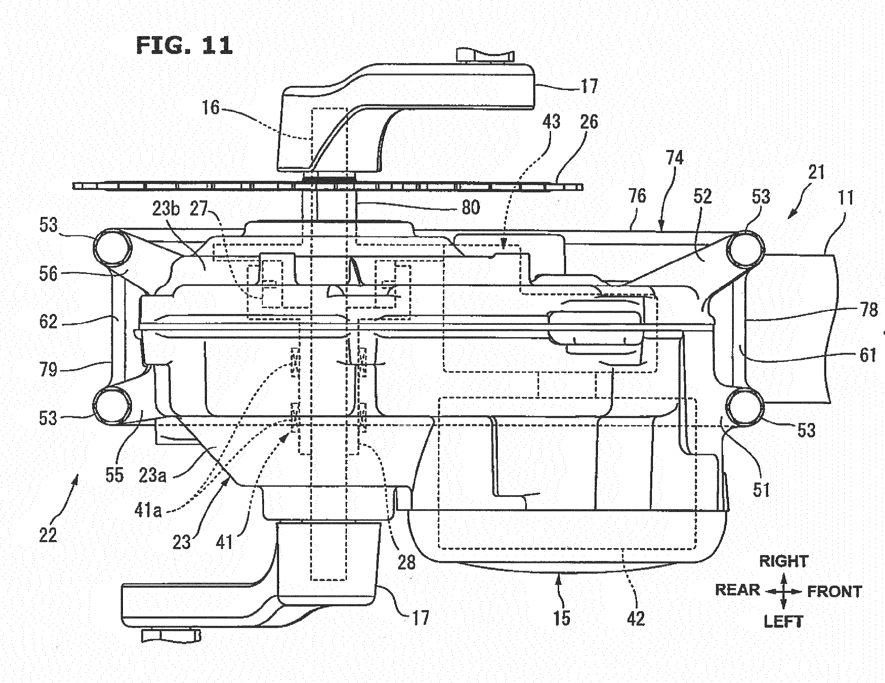

As shown in Fig. 11, the power unit 15 according to this embodiment has a cylindrical resultant force output shaft 80 into which a pedal crank shaft 16 is inserted. A chain sprocket 26 is fixed to the end portion of the resultant force output shaft 80 on the right side of the body. The end portion of the resultant force output shaft 80 on the left side of the body is connected to a crank rotation input shaft 28 via an input one-way clutch 27. A pedal force detector 41 according to this embodiment is a well-known magnetostrictive detector which detects, by a detecting coil 41a, a change in magnetic permeability when the crank rotation input shaft 28 strains due to the pedal force of the biker.

A speed reducer 43 according to this embodiment reduces the speed of the rotation of a motor 42, and transmits the rotation to the resultant force output shaft 80 via a motor one-way clutch (not shown). That is, the power unit 15 outputs the resultant force of human power applied to the pedal crank shaft 16 and motor driving force to the outside from the resultant force output shaft 80. The resultant force of the human power and motor driving force is transmitted from the resultant force output shaft 80 to the rear wheel 5 via the chain sprocket 26 and a chain 29. In this embodiment, the resultant force output shaft 80, chain sprocket 26, chain 29, and the like form "a transmitting member" of the present invention.

Even when adopting this embodiment, the same effect as that of the embodiment shown in Figs. 1 to 8 is obtained.

### (Third Embodiment)

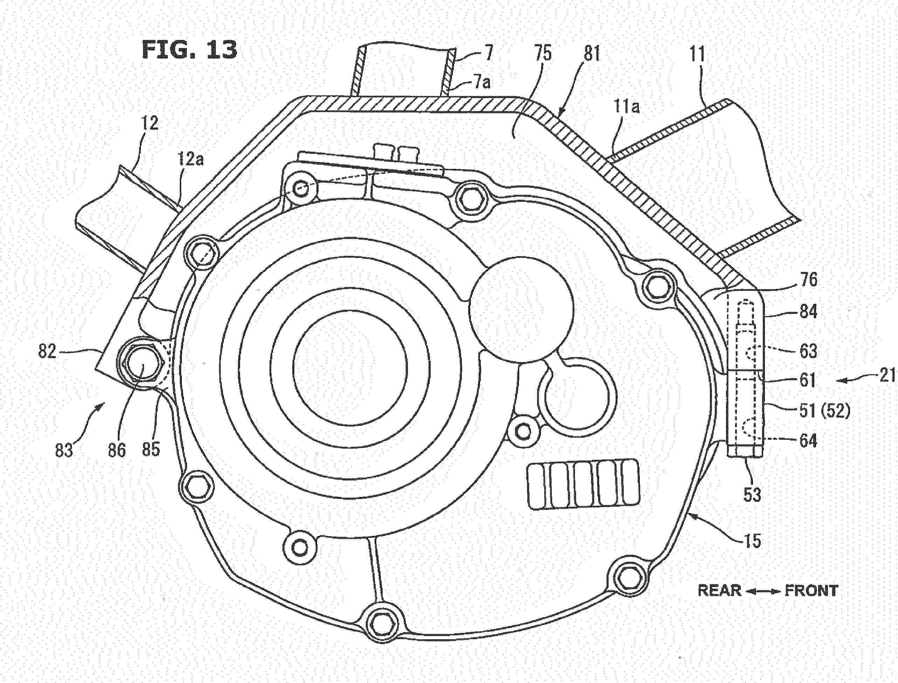

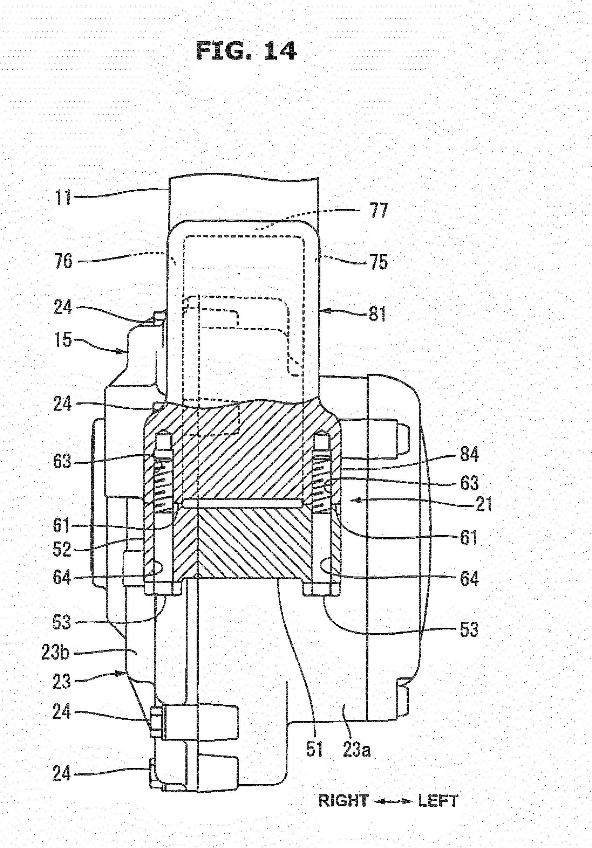

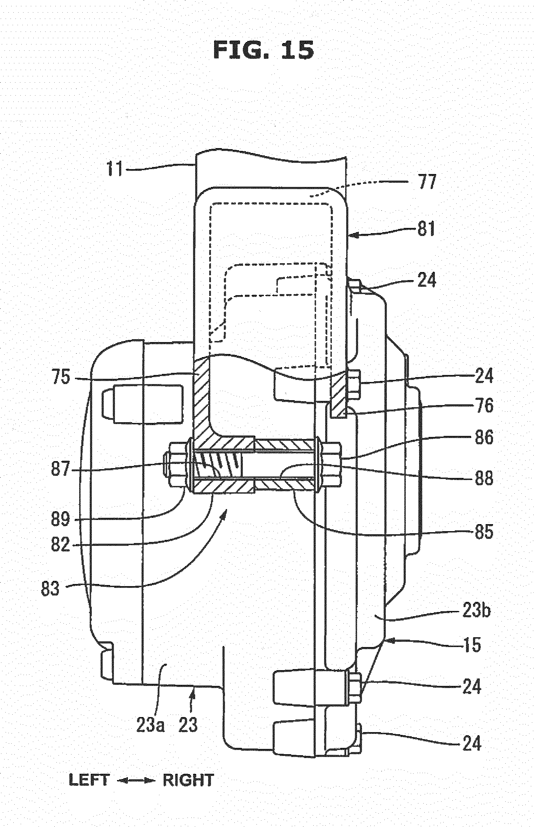

A mounting structure for mounting a power unit on a body frame can be configured as shown in Figs. 13 to 15. The same reference numerals as in Figs. 1 to 12 denote the same or similar members in Figs. 13 and 15, and a detailed explanation thereof will properly be omitted.

A power unit mounting bracket 81 according to this embodiment is the same as the bracket 74 disclosed in the second embodiment except that a first connecting portion 82 (to be described later) is formed in the rear end portion.

The bracket 81 and a power unit 15 are connected to each other in a front fastening portion 21 including a front mounting seat 61 formed in the front end portion of the bracket 81, and a rear fastening portion 83 including the first connecting portion 82 formed in the rear end portion of the bracket 81. As in the first and second embodiments, the front fastening portion 21 includes the front mounting seat 61 of a bracket front end portion 84, first and second front mounting portions 51 and 52 of the power unit 15, and fixing bolts 53.

As shown in Fig. 15, the rear fastening portion 83 according to this embodiment includes the first connecting portion 82 formed in the rear end portion of the bracket 81, a second connecting portion 85 formed in the rear end portion of the power unit 15, and a fastening bolt 86 extending through the first and second connecting portions 82 and 85. The first connecting portion 82 is integrated with a side plate 75 of the bracket 81 on the left side of the body. A through hole 87 extending in the left-right direction of the body is formed in the first connecting portion 82.

The second connecting portion 85 is integrated with a left half portion 23a of a housing 23. The formation position of the second connecting portion 85 overlaps the first connecting portion 82 in the left-right direction of the body, and corresponds to a central portion of the bracket 81 in the left-right direction when viewed from the rear of the body. The second connecting portion 85 according to this embodiment is formed into a shape overlapping the end face of the first connecting portion 82 on the body right side. Also, a through hole 88 communicating with the through hole 87 of the first connecting portion 82 when the second connecting portion 85 overlaps the first connecting portion 82 is formed in the second connecting portion 85.

The fastening bolt 86 is inserted from the body right side into the through holes 87 and 88 of the first and second connecting portions 82 and 85 in a state in which the first and second connecting portions 82 and 85 overlap each other in the left-right direction of the body. A nut 89 is screwed on the distal end portion of the fastening bolt 86, which is positioned on the body left side. The first connecting portion 82 and second connecting portion 85 are thus fastened to each other by the fastening bolt 86 extending in the left-right direction of the body.

In this embodiment, the work of mounting the power unit 15 on a body frame 6 is performed by turning the body frame 6 upside down, as when adopting the above-described first and second embodiments. When the body frame 6 is turned upside down, the front mounting seat 61 of the bracket 81 points upward. To mount the power unit 15 on the bracket 81, the power unit 15 is first placed on the bracket 81, and the first connecting portion 82 and second connecting portion 85 are connected by the fastening bolt 86. In this state, the nut 89 is loosely screwed on the fastening bolt 86. This makes the power unit 15 swingable in an upper-lower direction around the fastening bolt 86 as an axis.

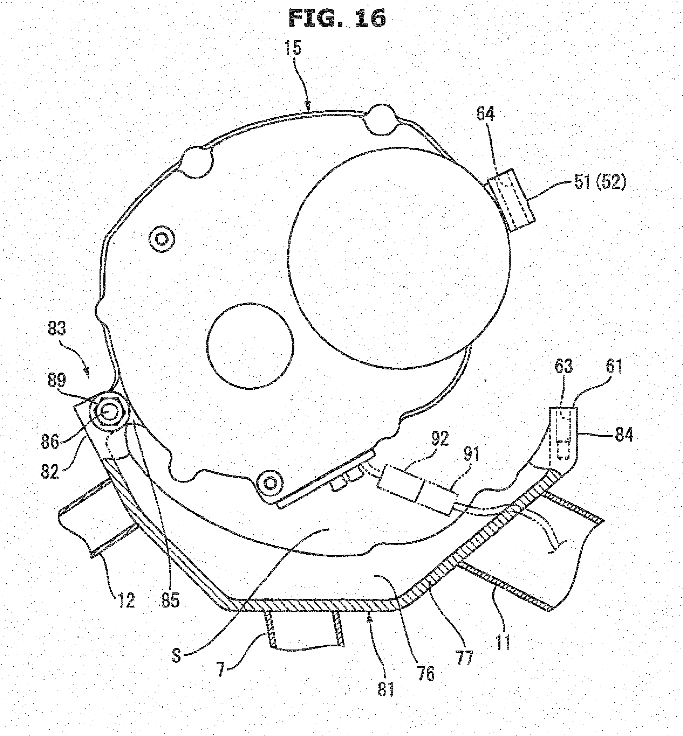

Then, as shown in Fig. 16, a worker (not shown) pulls up the front end portion of the power unit 15, thereby rotating the power unit 15 around the fastening bolt 86 as an axis. When the front end portion of the power unit 15 is pulled up, a space S is formed between the lower portion of the power unit 15 in this state (this portion is the upper portion when viewed in a state in which a front wheel 10 and a rear wheel 5 are grounded) and the bracket 81. Subsequently, the power unit 15 is held in the pulled-up state by using a jig (not shown) or the like, and the worker connects a connector 91 of the body and a connector 92 of the power unit 15 in the above-described space S. After this work of connecting the connectors 91 and 92 is complete, the power unit 15 is moved down to overlay the first and second front mounting portions 51 and 52 on the front mounting seat 61 of the bracket 81 from above. After that, the first and second front mounting portions 51 and 52 are fastened to the front mounting seat 61 by the fixing bolts 53, and the second connecting portion 85 is fastened to the first connecting portion 82 by the fastening bolt 86. The power unit 15 is fixed to the bracket 81 by thus performing fastening by using the fixing bolts 53 and fastening bolt 86.

In this embodiment, the power unit 15 is swingable around the fastening bolt 86 as an axis when assembled. Therefore, the connecting work is performed as described above by widely opening the space between the lower portion of the power unit 15 (that is, the upper portion when the front wheel 10 and rear wheel 5 are grounded) and the bracket 81. Accordingly, this embodiment can provide a power-assisted bicycle which further facilitates the work of assembling the power unit 15.

### (Fourth Embodiment)

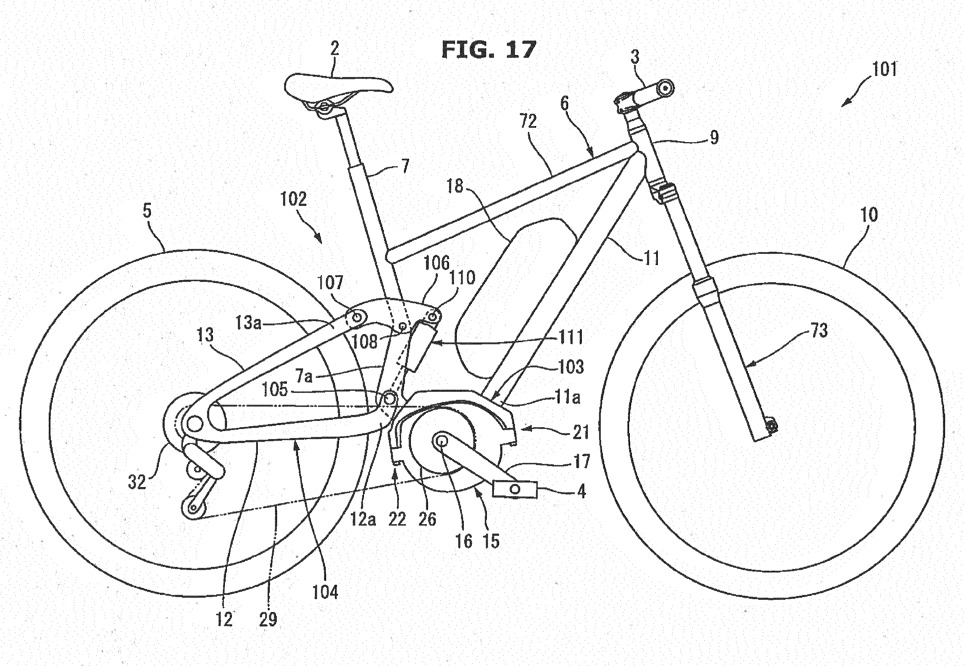

A power-assisted bicycle according to the present invention can adopt an arrangement shown in Fig. 17. The same reference numerals as in Figs. 1 to 16 denote the same or similar members in Fig. 17, and a detailed explanation thereof will properly be omitted.

As will be described in detail later, a power-assisted bicycle 101 shown in Fig. 17 includes a rear wheel suspension 102. A power unit mounting bracket 103 according to this embodiment is formed like the bracket 74 disclosed in the second embodiment. The bracket 103 is welded to a lower end portion 11a of a down tube 11 and a lower end portion 7a of a seat tube 7. In this embodiment including the rear wheel suspension 102, chain stays 12 function as swing arms 104. Front end portions 12a of the chain stays 12 are not welded to the bracket 103.

The front end portions 12a of the chain stays 12 shown in Fig. 17 are connected to the lower end portion 7a of the seat tube 7 by a first spindle 105 so as to be swingable in an upper-lower direction.

Seat stays 13 shown in Fig. 17 swing together with the chain stays 12, and front end portions 13a of the seat stays 13 are pivotally connected to the rear end portion of a link 106 by a second spindle 107. The seat stays 13 function as the swing arms 104 together with the chain stays 12. The link 106 includes a pair of left and right link pieces sandwiching the seat tube 7 from the two sides. A central portion of the link 106 in the front-rear direction is pivotally connected to the upper portion of the lower end portion 7a of the seat tube 7 by a third spindle 108. The upper end portion of a cushion unit 111 is pivotally connected to the front end portion of the link 106 by a fourth spindle 110. The front surface of the lower end portion 7a of the seat tube 7 is recessed backward to form a recessed shape. The lower end portion of the cushion unit 111 is inserted into an internal recessed space of this recessed shape. The lower end portion of the cushion unit 111 is pivotally connected to the first spindle 105. The axes of the first to fourth spindles 105, 107, 108, and 110 are parallel to the left-right direction of the body.

The bracket 103 and a power unit 15 according to this embodiment are connected to each other by a front fastening portion 21 and a rear fastening portion 22. Like the above-described embodiments, therefore, no fastening portion exists above the power unit 15, so the bracket 103 can be arranged above and near the power unit 15. This forms a wide free space above the bracket 103.

Also, a rear wheel 5 of the power-assisted bicycle 101 according to this embodiment is supported by a body frame 6 so as to be movable in an upper-lower direction by the rear wheel suspension 102 including the link 106 and cushion unit 111. The lower portion of the cushion unit 111 is arranged in the free space formed above the bracket 103.

In this embodiment, therefore, the degree of freedom of the position of the cushion unit 111 increases, so the rear wheel suspension 102 having a high performance can be installed.

### (Modifications of Fastening Portions of First to Fourth Embodiments)

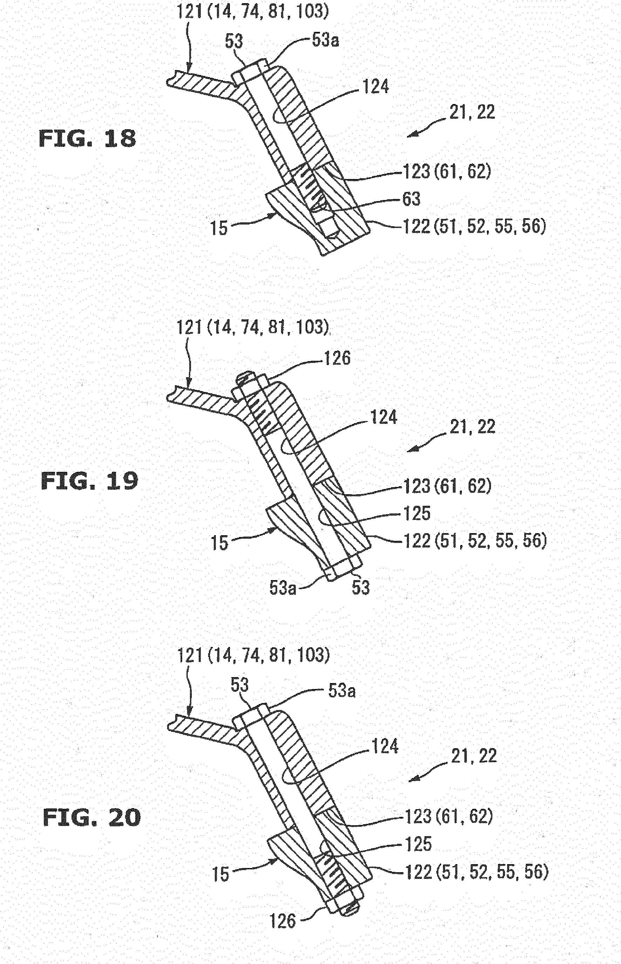

In each of the above-described embodiments, female screw portions into which the fixing bolts 53 are screwed are formed as the screw holes 63 in the brackets 14, 74, 81, and 103. However, the structure of the female screw portion can also appropriately be changed as shown in Figs. 18 to 20. The same reference numerals as in Figs. 1 to 17 denote the same or similar members in Figs. 18 to 20, and a detailed explanation thereof will properly be omitted. In Figs. 18 to 20, the brackets 14, 74, 81, and 103 will generally simply be referred to as a bracket 121.

Also, in Figs. 18 to 20, the first and second front mounting portions 51 and 52 and first and second rear mounting portions 55 and 56 will generally simply be referred to as a mounting portion 122. Furthermore, in Figs. 18 to 20, the front mounting seat 61 of the pillar member 49, the front mounting seat 61 of the bracket front end portions 78 and 84, and the rear mounting seat 62 of the bracket rear end portions 54 and 79 will generally simply be referred to as a mounting seat 123.

The screw hole 63 is formed in the mounting portion 122 of the power unit 15 shown in Fig. 18. Also, a through hole 124 for inserting the fixing bolt 53 is formed in the mounting seat 123 of the bracket 121 shown in each of Figs. 18 to 20. The fixing bolt 53 shown in Fig. 18 is screwed into the screw hole 63 of the mounting portion 122 through the through hole 124 of the bracket 121.

A through hole 125 for inserting the fixing bolt 53 is formed in the mounting portion 122 shown in each of Figs. 19 and 20. The fixing bolt 53 shown in Fig. 19 is inserted into the through holes 124 and 125 from below. "Below" herein mentioned is below when viewed in a state in which the front wheel 10 and rear wheel 5 are grounded. A nut 126 is screwed on the distal end portion (upper end portion) of the fixing bolt 53. The fixing bolt 53 shown in Fig. 20 is inserted into the through holes 124 and 125 from above. A nut 126 is screwed on the distal end portion (lower end portion) of the fixing bolt 53. The nut 126 shown in each of Figs. 19 and 20 is formed as a member separated from the bracket 121 and mounting portion 122. The nut 126 shown in Fig. 19 can be welded to the bracket 121 beforehand. The nut 126 shown in Fig. 20 can be welded to the mounting portion 122 beforehand.

In each of the forms shown in Figs. 19 and 20, the nut 126 formed as a member separated from one of the mounting seat 123 of the bracket 121 and the mounting portion 122 of the power unit 15 forms "a female screw portion" of the present invention. In this embodiment, the mounting portion 122 can be fastened to the mounting seat 123 by the fixing bolt 53 and nut 126 without forming the screw hole 63 in the mounting portion 122 or mounting seat 123. Accordingly, both the mounting seat 123 and mounting portion 122 are formed into simple shapes, so the rigidity of these members can further be increased.

In the present invention as has been explained above, the mounting portion of the power unit is pushed against the mounting seat of the bracket by fastening the fixing bolt. Therefore, the bracket need not elastically deform when mounting the mounting portion of the power unit on the mounting seat of the bracket, so a bracket having a high rigidity can be used. The bracket and the mounting portion of the power unit need only be formed with accuracy by which they can overlap each other in an upper-lower direction. This accuracy can be lower than that when inserting a mounting portion between a pair of mounting plates so as to narrow the gap.

Accordingly, the power unit mounting bracket and the mounting portion of the power unit need not be formed with accuracy higher than necessary, and the power unit is strongly mounted on the body frame by using a high-rigidity power unit mounting bracket. Therefore, the present invention can provide a power-assisted bicycle capable of improving both the fastening properties when mounting the power unit and the rigidity of the mounting structure, while reducing the manufacturing cost.

## Claims

1. A power-assisted bicycle (1, 71,101) which comprises:
a front wheel (10);
a rear wheel (5);
a body frame (6) configured to steerably and rotatably support the front wheel (10), and rotatably support the rear wheel (5);
a bracket (14, 74, 103) for mounting a power unit (15), the bracket (14, 74, 103) being formed on the body frame (6);
the power unit (15) being fixed to the bracket (14, 74, 103), including a crank shaft (16) to be rotated by human power and a motor (42) for auxiliary power, and configured to output each of the human power applied to the crank shaft (16) and driving force of the motor (42), or a resultant force of the human power and the driving force of the motor (42), to an outside; and
a transmitting member (29) configured to transmit the resultant force of the human power and the driving force of the motor (42) to the rear wheel (5),
wherein the body frame (6) comprises:
a front fork (8) configured to rotatably support the front wheel (10);
a head pipe (9) configured to steerably support the front fork (8);
a down tube (11) extending backward and downward from the head pipe (9);
a seat tube (7) extending upward from a vicinity of a lower end portion of the down tube (11); and
a chain stay (12) extending forward from an axle of the rear wheel (5) and configured to rotatably support the rear wheel (5),
wherein the bracket (14, 74, 103) is fixed to the body frame (6) by being fixed to at least the lower end portion of the down tube (11), and
wherein the bracket (14, 74, 103) has two mounting seats (61, 62) pointing downward when viewed in a state in which the front wheel (10) and the rear wheel (5) are grounded, **characterized in that** a housing (23) of the power unit (15) is split in a left-right direction into a left half portion (23a) and a right half portion (23b) which are joined and connected together;
the power unit (15) has two mounting portions (51, 52, 55, 56), which are configured to overlap the mounting seat (61, 62) from below, per mounting seat (61, 62) of the bracket, one (51, 55) of said two mounting portions (51, 52, 55, 56) being integrated with the left half portion (23a) of the housing (23), the other (52, 56) of said two mounting portions (51, 52, 55, 56) being integrated with the right half portion (23b) of the housing (23), each of the mounting portions (51, 52, 55, 56) being fastened to the associated mounting seat (61, 62) via one fixing bolt (53);
each fixing bolt (53) extends in a direction in which the associated mounting seat (61, 62) and the associated mounting portion (51, 52, 55, 56) overlap each other, and fastens the associated mounting portion (51, 52, 55, 56) to the associated mounting seat (61, 62);
a fastening portion (21, 22) including one of the two mounting seats (61, 62), the associated two mounting portions (51, 52, 55, 56) and the associated two fixing bolts (53) is formed in each of two end portions of the bracket (14, 74, 103) and the power unit (15) in a front-rear direction.

2. A power-assisted bicycle which comprises:
a front wheel (10);
a rear wheel (5);
a body frame (6) configured to steerably and rotatably support the front wheel (10), and
rotatably support the rear wheel (5);
a bracket (81) for mounting a power unit (15), the bracket (81) being formed on the body frame (6);
the power unit (15) being fixed to the bracket (81), including a crank shaft (16) to be rotated by human power and a motor (42) for auxiliary power, and configured to output each of the human power applied to the crank shaft (16) and driving force of the motor (42), or a resultant force of the human power and the driving force of the motor (42), to an outside; and
a transmitting member (29) configured to transmit the resultant force of the human power and the driving force of the motor (42) to the rear wheel (5),
wherein the body frame (6) comprises:
a front fork (8) configured to rotatably support the front wheel (10);
a head pipe (9) configured to steerably support the front fork (8);
a down tube (11) extending backward and downward from the head pipe (9);
a seat tube (7) extending upward from a vicinity of a lower end portion of the down tube (11); and
a chain stay (12) extending forward from an axle of the rear wheel (5) and configured to rotatably support the rear wheel (5),
wherein the bracket (81) is fixed to the body frame (6) by being fixed to at least the lower end portion of the down tube (11), and
wherein the bracket (81) has a mounting seat (61) pointing downward when viewed in a state in which the front wheel (10) and the rear wheel (5) are grounded, **characterized in that** a housing (23) of the power unit (15) is split in a left-right direction into a left half portion (23a) and a right half portion (23b) which are joined and connected together;
the power unit (15) has two mounting portions (51, 52), which are configured to overlap the mounting seat (61) from below, one (51) of said two mounting portions (51, 52) being integrated with the left half portion (23a) of the housing (23), the other (52) of said two mounting portions (51, 52) being integrated with the right half portion (23b) of the housing (23), each of the mounting portions (51, 52) being fastened to the mounting seat (61) via one fixing bolt (53);
each fixing bolt (53) extends in a direction in which the mounting seat (61) and the associated mounting portion (51, 52) overlap each other, and fastens the associated mounting portion (51, 52) to the mounting seat (61);
a fastening portion (21) including the mounting seat (61), the two mounting portions (51, 52) and the two fixing bolts (53) is formed in one end portion of the bracket and the power unit (15) in a front-rear direction,
a first connecting portion (82) is formed in the other end portion of the bracket in the front-rear direction,
a second connecting portion (85) overlapping the first connecting portion (82) in the left-right direction is formed in the other end portion of the power unit (15) in the front-rear direction, and
the first connecting portion (82) and the second connecting portion (85) are fastened to each other by a fastening bolt (86) extending in the left-right direction.

3. A power-assisted bicycle (1, 71, 101) according to any of claims 1 or 2, wherein, for each fixing bolt (53), a female screw portion (63, 126) into which the fixing bolt (53) is screwed is formed in one of the associated mounting seat (61, 62) and the associated mounting portion (51, 52, 55, 56), and a through
hole (64, 124, 125) extending in an upper-lower direction when viewed in the state in which the front wheel (10) and the rear wheel (5) are grounded is formed in the other, and
the fixing bolt (53) is screwed into the female screw portion (63, 126) through the through hole (64, 124, 125).

4. A power-assisted bicycle (1, 71, 101) according to claim 3, wherein the female screw portion (126) comprises a nut (126) formed as a member separated from one of the associated mounting seat (61, 62) and the associated mounting portion (51, 52, 55, 56).

## Patentansprüche

1. Stromunterstütztes Fahrrad (1, 71, 101) umfassend:
ein vorderes Rad (10);
ein hinteres Rad (5);
einen Rahmen (6), der konfiguriert ist, in einer lenkbaren und drehbaren Art das vordere Rad (10) zu unterstützen und in einer drehbaren Art das hintere Rad (5) zu unterstützen;
eine Halterung (14, 74, 103) für die Montierung einer Leistungseinheit (15), wobei die Halterung (14, 74, 103) auf dem Rahmen (6) gestaltet wird;
wobei die Leistungseinheit (15) an der Halterung (14, 74, 103) befestigt wird, wobei die Leistungseinheit (15) eine Kurbelwelle (16), die durch eine menschliche Kraft zu drehen ist,
und einen Motor (46) für eine Hilfskraft umfasst, und die konfiguriert ist, sowohl die an der Kurbelwelle (16) angewendete menschliche Kraft als auch die Antriebskraft des Motors (42) oder eine resultierende Kraft der menschlichen Kraft und der Antriebskraft des Motors (42),
zu einem Output auszugeben; und
ein Übertragungselement (29), das konfiguriert ist, die resultierende Kraft der menschlichen Kraft und der Antriebskraft des Motors (42) auf das hintere Rad (5) zu übertragen,
wobei der Rahmen (6) umfasst:
eine vordere Gabel (8), die konfiguriert ist, das vordere Rad (10) in einer drehbaren Art zu unterstützen;
ein Steuerrohr (9), das konfiguriert ist, die vordere Gabel (8) in einer lenkbaren Art zu unterstützen;
ein Unterrohr (11), das sich nach hinten und nach unten aus dem Steuerrohr (9) erstreckt;
ein Sitzrohr (7), das sich nach oben aus einer Nähe eines unteren Endabschnitts des Unterrohres (11) erstreckt; und
eine Kettenstrebe (12), die sich nach vorne aus einer Welle des hinteren Rads (5) erstreckt und konfiguriert ist, das hintere Rad (5) in einer drehbaren Art zu unterstützen,
wobei die Halterung (14, 74, 103) an dem Rahmen (6) befestigt ist, indem sie an mindestens dem unteren Endabschnitt des Unterrohres (11) befestigt ist, und
wobei die Halterung (14, 74, 103) zwei Montierungssitze (61, 62) aufweist, die, wenn in einem Zustand betrachtet, in dem das vordere Rad (10) und das hintere Rad (5) geerdet sind, nach unten weisen, **dadurch gekennzeichnet, dass**
ein Gehäuse (23) der Leistungseinheit (15) in einer linken-rechten Richtung in einem linken Halbabschnitt (23a) und in einem rechten Halbabschnitt (23b) aufgeteilt ist, die miteinander verbunden und angekoppelt sind;
die Leistungseinheit (15) zwei Montierungsabschnitte (51, 52, 55, 56) pro Montierungssitz (61, 62) des Rahmens (6) aufweist, die konfiguriert sind, die Montierungssitze (61, 62) von unten zu überlappen,
einer (51, 55) der zwei genannten Montierungsabschnitte (51, 52, 55, 56) mit dem linken Halbabschnitt (23a) der Gehäuse (23) integriert ist, der andere (52, 56) der zwei genannten Montierungsabschnitte (51, 52, 55, 56) mit dem rechten Halbabschnitt (23b) der Gehäuse (23) integriert ist, jeder der Montierungsabschnitte (51, 52, 55, 56) zu dem zugehörigen Montierungssitz (61, 62) durch eine Befestigungsschraube (53) befestigt ist;
jede Befestigungsschraube (53) sich in eine Richtung, in der der zugehörige Montierungssitz (61, 62) und der zugehörige Montierungsabschnitt (51, 52, 55, 56) einander überlappen, erstreckt und den zugehörigen Montierungsabschnitt (51, 52, 55, 56) an dem zugehörigen Montierungssitz (61, 62) befestigt;
ein Befestigungsabschnitt (21, 22), der einen der zwei Montierungssitze (61, 62), die zwei zugehörigen Montierungsabschnitte (51, 52, 55, 56) und die zugehörigen zwei Befestigungsschrauben (53) umfasst, an jedem der zwei Endabschnitte der Halterung (14, 74, 103) und der Leistungseinheit (15) in einer vorderen und hinteren Richtung gestaltet ist.

2. Stromunterstütztes Fahrrad umfassend:
ein vorderes Rad (10);
ein hinteres Rad (5);
einen Rahmen (6), der konfiguriert ist, in einer lenkbaren und drehbaren Art das vordere Rad (10) zu unterstützen und in einer drehbaren Art das hintere Rad (5) zu unterstützen;
eine Halterung (81) für die Montierung einer Leistungseinheit (15), wobei die Halterung (81) auf dem Rahmen (6) gestaltet wird;
wobei die Leistungseinheit (15) an der Halterung (81) befestigt wird, wobei die Leistungseinheit (15) eine Kurbelwelle (16), die durch eine menschliche Kraft zu drehen ist, und einen Motor (46) für eine Hilfskraft umfasst, und konfiguriert ist, sowohl die an die Kurbelwelle (16) angewendete menschliche Kraft als auch die Antriebskraft des Motors (42) oder eine resultierende Kraft der menschlichen Kraft und der Antriebskraft des Motors (42) zu einem Output auszugeben; und
ein Übertragungselement (29), das konfiguriert ist, die resultierende Kraft der menschlichen Kraft und der Antriebskraft des Motors (42) auf das hintere Rad (5) zu übertragen,
wobei der Rahmen (6) umfasst:
eine vordere Gabel (8), die konfiguriert ist, das vordere Rad (10) in einer drehbaren Art zu unterstützen;
ein Steuerrohr (9), das konfiguriert ist, die vordere Gabel (8) in einer lenkbaren Art zu unterstützen;
ein Unterrohr (11), das sich nach hinten und nach unten aus dem Steuerrohr (9) erstreckt;
ein Sitzrohr (7), das sich nach oben aus einer Nähe eines unteren Endabschnitts des Unterrohres (11) erstreckt; und
eine Kettenstrebe (12), die sich nach vorne aus einer Welle des hinteren Rads (5) erstreckt, und konfiguriert ist, das hintere Rad (5) in einer drehbaren Art zu unterstützen,
wobei die Halterung (81) an dem Rahmen (6) befestigt ist, indem sie an mindestens dem unteren Endabschnitt des Unterrohres (11) befestigt ist, und
wobei die Halterung (81) einen Montierungssitz (61) aufweist, der, wenn in einem Zustand betrachtet, in dem das vordere Rad (10) und das hintere Rad (5) geerdet sind, nach unten weist, **dadurch gekennzeichnet, dass**
ein Gehäuse (23) der Leistungseinheit (15) in einer linken-rechten Richtung in einem linken Halbabschnitt (23a) und in einem rechten Halbabschnitt (23b) aufgeteilt ist, die miteinander verbunden und angekoppelt sind;
die Leistungseinheit (15) zwei Montierungsabschnitte (51, 52) aufweist, die konfiguriert sind, den Befestigungssitz (61) von unten zu überlappen, einer (51) der zwei genannten Montierungsabschnitte (51, 52) mit dem linken Halbabschnitt (23a) der Gehäuse (23) integriert ist, der andere (52) der zwei genannten Montierungsabschnitte (51, 52) mit dem rechten Halbabschnitt (23b) der Gehäuse (23) integriert ist, jeder der Montierungsabschnitte (51, 52) an dem Befestigungssitz (61) durch eine Befestigungsschraube (53) befestigt ist;
jede Befestigungsschraube (53) sich in eine Richtung, in der der Befestigungssitz (61) und der zugehörige Montierungsabschnitt (51, 52) einander überlappen, erstreckt und den zugehörigen Montierungsabschnitt (51, 52) an dem Befestigungssitz (61) befestigt;
ein Befestigungsabschnitt (21), der den Befestigungssitz (61), die zwei Montierungsabschnitte (51, 52) und die zwei Befestigungsschrauben (53) umfasst, an einem Endabschnitt der Halterung und der Leistungseinheit (15) in einer vorderen und hinteren Richtung gestaltet ist,
ein erster Verbindungsabschnitt (82) an dem anderen Endabschnitt der Halterung in der vorderen und hinteren Richtung gestaltet ist;
ein zweiter Verbindungsabschnitt (85), der den ersten Verbindungsabschnitt (82) in der vorderen und hinteren Richtung überlappt, an dem anderen Endabschnitt der Leistungseinheit (15) in der vorderen und hinteren Richtung gestaltet ist, und
der erste Verbindungsabschnitt (82) und der zweite Verbindungsabschnitt (85) an einander durch eine Befestigungsschraube (86) befestigt sind, die sich in der vorderen und hinteren Richtung erstreckt.

3. Stromunterstütztes Fahrrad (1, 71, 101) nach einem der Ansprüche 1 oder 2,
wobei für jede Befestigungsschraube (53) ein Schraubenmutter-Abschnitt (63, 126), in den die Befestigungsschraube (53) geschraubt wird, an einem des zugehörigen Montierungssitzes (61, 62) und des zugehörigen Montierungsabschnitts (51, 52, 55, 56) gestaltet wird, und ein Durchgangsloch (64, 124, 125), das sich in einer oberen-unteren Richtung erstreckt, wenn in einem Zustand betrachtet, in dem das vordere Rad (10) und das hintere Rad (5) geerdet sind, an dem anderen gestaltet wird, und
die Befestigungsschraube (53) wird in den Schraubenmutter-Abschnitt (63, 126) durch das Durchgangsloch (64, 124, 125) geschraubt.

4. Stromunterstütztes Fahrrad (1, 71, 101) nach Anspruch 3, wobei der Schraubenmutter-Abschnitt (126) eine Gegenmutter (126) umfasst, die als ein Teil gestaltet wird, das von einem des zugehörigen Montierungssitzes (61, 62) und des zugehörigen Montierungsabschnitts (51, 52, 55, 56) getrennt ist.

## Revendications

1. Bicyclette à assistance électrique (1, 71, 101) qui comporte :
une roue avant (10) ;
une roue arrière (5) ;
un cadre (6) configuré pour supporter la roue avant (10) de manière orientable et rotative et supporter la roue arrière (5) de manière rotative ;
un support (14, 74, 103) pour monter une unité motrice (15), le support (14, 74, 103) étant formé sur le cadre (6) ;
l'unité motrice (15) étant fixée au support (14, 74, 103), comprenant un vilebrequin (16) destiné à être mis en rotation par une puissance d'origine humaine et un moteur (42) pour une puissance auxiliaire, et étant configurée pour sortir chacune de la puissance d'origine humaine appliquée au vilebrequin (16) et de la force motrice du moteur (42), ou une force résultant de la puissance d'origine humaine et de la force motrice du moteur (42), vers l'extérieur ; et
un élément de transmission (29) configuré pour transmettre la force résultant de la puissance d'origine humaine et de la force motrice du moteur (42) à la roue arrière (5),
où le cadre (6) comporte :
une fourche avant (8) configurée pour supporter de manière rotative la roue avant (10) ;
un tube frontal (9) configuré pour supporter de manière orientable la fourche avant (8) ;
un tube oblique (11) s'étendant vers l'arrière et vers le bas à partir du tube frontal (9) ;
un tube de selle (7) s'étendant vers le haut à partir du voisinage d'une partie d'extrémité inférieure du tube oblique (11) ; et
une base (12) s'étendant vers l'avant à partir d'un axe de la roue arrière (5) et configurée pour supporter de manière rotative la roue arrière (5),
où le support (14, 74, 103) est fixé au cadre (6) en étant fixé au moins à la partie d'extrémité inférieure du tube oblique (11), et
où le support (14, 74, 103) présente deux sièges de montage (61, 62) orientés vers le bas dans une vue dans laquelle la roue avant (10) et la roue arrière (5) reposent sur le sol,
**caractérisée en ce qu'**un boîtier (23) de l'unité motrice (15) est divisé dans une direction gauche/droite en une moitié gauche (23a) et une moitié droite (23b) qui sont assemblées et raccordées l'une à l'autre ;
l'unité motrice (15) présente deux parties de montage (51, 52, 55, 56) qui sont configurées pour se superposer au siège de montage (61, 62) par le bas, pour chacun des sièges de montage (61, 62) du support, l'une (51, 55) desdites deux parties de montage (51, 52, 55, 56) étant intégrée à la moitié gauche (23a) du boîtier (23), l'autre (52, 56) desdites deux parties de montage (51, 52, 55, 56) étant intégrée à la moitié droite (23b) du boîtier (23), chacune des parties de montage (51, 52, 55, 56) étant fixée au siège de montage (61, 62) associé par un boulon de fixation (53) ;
chaque boulon de fixation (53) s'étend dans une direction de superposition du siège de montage associé (61, 62) et de la partie de montage associée (51, 52, 55, 56), et fixe la partie de montage associée (51, 52, 55, 56) au siège de montage associé (61, 62) ;
une partie de fixation (21, 22) comprenant l'un des deux sièges de montage (61, 62), les deux parties de montage associées (51, 52, 55, 56) et les deux boulons de fixation associés (53) est formée dans chacune de deux parties d'extrémité du support (14, 74, 103) et dans l'unité motrice (15) dans une direction avant/arrière.

2. Bicyclette à assistance électrique qui comporte :
une roue avant (10) ;
une roue arrière (5) ;
un cadre (6) configuré pour supporter la roue avant (10) de manière orientable et rotative et supporter la roue arrière (5) de manière rotative ;
un support (81) pour monter une unité motrice (15), le support (81) étant formé sur le cadre (6) ;
l'unité motrice (15) étant fixée au support (81), comprenant un vilebrequin (16) destiné à être mis en rotation par une puissance d'origine humaine et un moteur (42) pour une puissance auxiliaire, et étant configuré pour sortir chacune de la puissance d'origine humaine appliquée au vilebrequin (16) et de la force motrice du moteur (42), ou une force résultant de la puissance d'origine humaine et de la force motrice du moteur (42), vers l'extérieur ; et
un élément de transmission (29) configuré pour transmettre la force résultant de la puissance d'origine humaine et de la force motrice du moteur (42) à la roue arrière (5),
où le cadre (6) comporte :
une fourche avant (8) configurée pour supporter de manière rotative la roue avant (10) ;
un tube frontal (9) configuré pour supporter de manière orientable la fourche avant (8) ;
un tube oblique (11) s'étendant vers l'arrière et vers le bas à partir du tube frontal (9) ;
un tube de selle (7) s'étendant vers le haut à partir du voisinage d'une partie d'extrémité inférieure du tube oblique (11) ; et
une base (12) s'étendant vers l'avant à partir d'un axe de la roue arrière (5) et configurée pour supporter de manière rotative la roue arrière (5),
où le support (81) est fixé au cadre (6) en étant fixé au moins à la partie d'extrémité inférieure du tube oblique (11), et
où le support (81) présente un siège de montage (61) orienté vers le bas dans une vue dans laquelle la roue avant (10) et la roue arrière (5) reposent sur le sol,
**caractérisée en ce qu'**un boîtier (23) de l'unité motrice (15) est divisé dans une direction gauche/droite en une moitié gauche (23a) et une moitié droite (23b) qui sont assemblées et raccordées l'une à l'autre ;
l'unité motrice (15) présente deux parties de montage (51, 52) qui sont configurées pour se superposer au siège de montage (61) par le bas, l'une (51) desdites deux parties de montage (51, 52) étant intégrée à la moitié gauche (23a) du boîtier (23), l'autre (52) desdites deux parties de montage (51, 52) étant intégrée à la moitié droite (23b) du boîtier (23), chacune des parties de montage (51, 52) étant fixée au siège de montage (61) par un boulon de fixation (53) ;
chaque boulon de fixation (53) s'étend dans une direction de superposition du siège de montage (61) et de la partie de montage associée (51, 52), et fixe la partie de montage associée (51, 52) au siège de montage (61) ;
une partie de fixation (21) comprenant le siège de montage (61), les deux parties de montage (51, 52) et les deux boulons de fixation (53) est formée dans une partie d'extrémité du support et dans l'unité motrice (15) dans une direction avant/arrière,
une première partie de connexion (82) est formée dans l'autre partie d'extrémité du support dans la direction avant/arrière,
une seconde partie de connexion (85) se superposant à la première partie de connexion (82) dans la direction gauche/droite est formée dans l'autre partie d'extrémité de l'unité motrice (15) dans la direction avant/arrière, et
la première partie de connexion (82) et la seconde partie de connexion (85) sont fixées l'une à l'autre par un boulon de fixation (86) s'étendant dans la direction gauche/droite.

3. Bicyclette à assistance électrique (1, 71, 101) selon l'une quelconque des revendications 1 ou 2, où pour chacun des boulons de fixation (53), une partie de filetage femelle (63, 126), dans laquelle est vissée le boulon de fixation (53), est formée dans l'un parmi les sièges de montage associés (61, 62) et la partie de montage associée (51, 52, 55, 56), et un trou traversant (64, 124, 125) s'étendant dans une direction de haut en bas, dans une vue dans laquelle la roue avant (10) et la roue arrière (5) reposent sur le sol, est formé dans l'autre, et
le boulon de fixation (53) est vissé dans la partie de filetage femelle (63, 126) à travers le trou traversant (64, 124, 125).

4. Bicyclette à assistance électrique (1, 71, 101) selon la revendication 3, où la partie de filetage femelle (126) comporte un écrou (126) formé comme un élément séparé du siège de montage associé (61, 62) ou de la partie de montage associée (51, 52, 55, 56).
